(19) Europäisches Patentamt
European Patent Office
Office européen des brevets

(11) **EP 2 068 139 A1**

(12) **EUROPEAN PATENT APPLICATION**

(43) Date of publication:
**10.06.2009 Bulletin 2009/24**

(51) Int Cl.:
***G01N 17/02*** *(2006.01)*

(21) Application number: **07122457.0**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor Toegepast-Natuurwetenschappelijk Onderzoek TNO 2628 VK The Hague (NL)**

(72) Inventors:
• **Bos, Tom**
  **NL-1087 HW Amsterdam (NL)**
• **Buter, Sibo**
  **NL-1722GA Zuid-Scharwoude (NL)**

(74) Representative: **Hatzmann, Martin Vereenigde Johan de Wittlaan 7 2517 JR Den Haag (NL)**

(54) **Electrochemical cell for EIS**

(57) The invention is directed to an electrochemical cell for electrochemical impedance spectroscopy, which comprises
- a housing (3) defining a space (4) comprising an electrolyte (5), a counter electrode (6) and optionally a reference electrode (7), wherein said counter electrode and said reference electrode are arranged to be in electrical contact with said electrolyte during use;
- an opening in said housing allowing the electrolyte to be in electrical contact with a substrate (2); and
- a flexible magnet (8) for attaching said electrochemical cell to said substrate (2).

Figure 1

**Description**

The invention is directed to an electrochemical cell for electrochemical impedance spectroscopy, the use thereof, an electrochemical impedance spectroscopy method, and the use of a flexible magnet.

Electrochemical impedance spectroscopy (EIS) is a fast, quantitative method of assessing the properties of a substrate and is often used for the analysis of coatings. With electrical impedance measurements, the electric properties of a system between two electrodes can be studied. This is generally done by applying an alternating voltage over the electrodes and by measuring the resulting current through the medium, but the opposite (applying a current and measuring the voltage) is also possible and sometimes done. In case an alternating voltage is applied over the electrodes and the resulting current is measured, the impedance $Z$ of a system can be expressed by equation (1)

$$Z = \frac{E_t}{I_t} = \frac{E_0 \sin(\omega t)}{I_0 \sin(\omega t + \varphi)} = Z_0 \frac{\sin(\omega t)}{\sin(\omega t + \varphi)} \qquad (1)$$

wherein $\omega$ is the radial frequency (expressed in radians/second), $E_t$ (the excitation signal) is the potential at time $t$ with amplitude $E_0$, and $I_t$ (the response signal) is the current at time $t$, shifted in phase $\varphi$ and having an amplitude $I_0$. The impedance is therefore expressed in terms of a magnitude $Z_0$ and a phase shift $\varphi$. Using Euler's relationship

$$e^{ix} = \cos(x) + i \sin(x) \qquad (2)$$

the impedance can also be expressed by equation (3).

$$Z(\omega) = \frac{E}{I} = Z_0 e^{i\varphi} = Z_0 (\cos(\varphi) + i \sin(\varphi)) \qquad (3)$$

Equation (3) is composed of a real and an imaginary part. EIS instrumentation records both real (resistive) and imaginary (capacitive) components of the impedance response of the system. An EIS measurement advantageously allows obtaining several relevant physical characteristics of a system in one measurement. In the case of a coated metal substrate (for which EIS is mostly used) these parameters include the resistance of the electrolyte in the electrochemical cell, the coating resistance and capacitance, the polarization resistance and capacitance, and the mass transfer resistance of the process.

EIS data are commonly analysed by fitting them to an equivalent electrical circuit model. The analyst tries to find a model whose impedance matches the measured data. Most of the circuit elements in the model are common electrical elements such as resistors, capacitors, and inductors. In many cases, some elements are replaced by a CPE (constant phase element) to account for non-ideal behaviour. A CPE, is a universal element which can represent a variety of real elements, such as an inductor (n = -1), a resistor (n = 0) and a capacitor (n = 1) or non-ideal dielectric behaviour ($-1 \leq n \leq 1$), in which n is a dimensionless parameter.

The impedance Z of a CPE equals:

$$Z = \frac{1}{(j\omega)^n \cdot Y_0}$$

wherein $Y_0$ is the admittance constant in $S^n/\Omega$ and n is the power of the CPE.

To be useful, the elements in the model should have a basis in the physical electrochemistry of the system concerned. As an example, most equivalent electrical circuit models contain a resistor that models the solution resistance of the electrochemical cell. The type of electrical components in the model and their interconnections control the shape of the impedance spectrum of the model. The parameters of the model, such as the resistance value of a resistor, control the size of each feature in the spectrum. Both these factors affect the degree to which the impedance spectrum of the model matches the measured EIS spectrum.

An important advantage of EIS over other techniques is the possibility of using very small amplitude signals without significantly disturbing the properties being measured. To make an EIS measurement, a small amplitude signal is applied to a specimen over a large frequency range.

The electrochemical cell for an EIS measurement conventionally comprises a counter electrode and a reference electrode, both immersed in an electrolyte. The counter electrode is often in the form of an inert metal (*e.g.* platinum) mesh. The electrochemical cell is placed on a substrate, mostly a coated metal, such as a corroding metal, which acts as the working electrode. The counter electrode is connected to a potentiostat. The potentiostat applies to the counter electrode whatever voltage and current are necessary to maintain the potential that is desired between the working and reference electrodes. The reference electrode is constructed so that it has a negligible contact potential regardless of the environment in which it is placed. The reference electrode is connected to a Volt meter. During the measurement a small sinusoidal perturbation (typically 5-50 mV, such as 20 mV) is applied between the counter electrode and the working electrode. The frequency of the perturbation ranges from 0.001 Hz to 1000 000 Hz. A measurement batch consists of a number of frequency sweeps, while the response of the system is monitored.

This conventional electrochemical cell for EIS has been very valuable for laboratory applications, but it may be impractical or even unsuitable for *in situ* measurements in the field, in particular in cases where the substrate to be measured is curved, or otherwise non-flat.

Various attempts have been made in the prior art to overcome this problem.

US-A-6 054 038 describes a portable, hand-held and non-destructive corrosion sensor. The sensor comprises a pen-like device which consists of a metal tip, which serves both as a counter and reference electrode. The metal structure being tested serves as the working electrode. An electrolyte is absent.

JP-A-61 108 954 describes an EIS probe for evaluating the deterioration of a coat film, using a sponge-like electrode which is impregnated with a conductive gel.

The present inventors, however, found that the use of a sponge is disadvantageous, because the area of the measured coating is hard to define due to changes in the dimensions of the sponge when pressure is applied and possible leakage of the electrolyte from the sponge.

Zdunek et al. ("A field-EIS probe and methodology for measuring bridge coating performance", presented at the fourth World Congress on Coatings Systems for Bridges and Steel Structures, St. Louis, Missouri, 1-3 February 1995) suggest replacing the liquid electrolyte by a cellulose-based gel that is doped with a suitable salt to provide sufficient conductivity.

US-A-2004/0 212 370 suggests to apply a vacuum to fix an electrochemical impedance spectroscopy apparatus to a coated substrate in a fluid tight manner.

There remains a challenge in providing a suitable electrochemical cell for electrochemical impedance spectroscopy, which is convenient for use in the field.

Another challenge remains in the provision of an electrochemical cell for electrochemical impedance spectroscopy, which can be used on curved substrates.

Object of the invention is to face the above-mentioned challenges and/or to at least partly overcome one or more of the shortcomings encountered in the prior art.

The inventors now surprisingly found that this object can be met by an electrochemical cell which can be sealed to a substrate to be measured by means of a flexible magnet.

Accordingly, in a first aspect the invention is directed to an electrochemical cell for electrochemical impedance spectroscopy comprising

- a housing defining a space comprising an electrolyte, a counter electrode and optionally a reference electrode, wherein said counter electrode and said reference electrode are arranged to be in electrical contact with said electrolyte during use;
- an opening in said housing allowing the electrolyte to be in electrical contact with a substrate; and
- a flexible magnet for attaching said electrochemical cell to said substrate.

The electrochemical cell of the invention is easy to attach on and detach from the substrate. Since the use of glue is not required, glue residuals at the inspected surface are prevented. Furthermore, the electrochemical cell of the invention can advantageously be applied at any orientation, even up-side-down. In particular, the electrochemical cell is suitable for measurements in narrow spaces and difficult orientations. In addition, the electrochemical cell can even be used for EIS measurements on curved or other non-flat substrates.

The term "flexible" as used in this application is meant to refer the capability of following the curvature of a curved object. Flexible materials may be characterised by a tensile modulus of preferably less than 50 MPa, more preferably less than 20 MPa, and even more preferably less than 10 MPa, as measured according to ISO standard 527. On the other hand, a flexible material preferably has a tensile modulus of at least 2 MPa. The flexibility can also be expressed as a function of hardness of the material, since the tensile modulus of such materials is hard to determine due to the non-linearity of the stress-strain diagrams. A flexible material may therefore also be characterised by a hardness of less than 100 (Shore A), more preferably less than 50 (Shore A) and even more preferably less than 15 (Shore A) as measured according to ISO standard 7619. On the other hand, a flexible material preferably does not have a hardness of less than 10 (Shore A).

The production of flexible magnets is well-known and for instance described in US-A-5 621 369, US-A-4 881 988, US-B-6 773 765, and EP-A-1 480 235. Flexible magnets may be prepared by mixing and dispersing a magnetic powder (such as ferrite magnetic powder) in an insulator matrix such as rubber or plastic resin and by applying thereafter press moulding, extrusion moulding, calendar roll moulding and the like. As an example, a flexible rubber magnet is basically a composite material which combines ferrite magnetic powder and compound rubber. Due to its characteristics, a flexible magnet can easily be formed into any complicated shape and does not easily break or crack. Flexible magnets may be manufactured with appropriate flexibility and cut into any size to meet a specific requirement. Flexible magnet sheets, with or without adhering back surfaces, are widely available and may for instance be obtained from any suitable manufacturer or company, such as from Magnetic Specialty Inc.

Suitable insulator matrices include rubber (natural, synthetic, or silicone) and thermoplastic elastomers such as epoxy resins or urethane resins.

Suitable magnetic powder materials include iron powder, ferrite powder, nickel powder, *etc.*

The term "magnet" as used in this application is meant to refer to a material that exhibits magnetisation due to its possessing a permanent magnetic dipole. This includes paramagnets, diamagnets and ferromagnets. It is preferred that the electrochemical impedance measurement is hardly, and more preferably not, disturbed by the magnet. Accordingly, electromagnets are not preferred for use in the present invention.

The magnetic flux density of the flexible magnet depends on different factors such as the application and the size of the electrochemical cell used. The flexible magnet should have sufficient flexibility and magnetic strength to ensure a water-tight setup of the electrochemical cell on the substrate. A required flexibility and strength depends on the specific conditions and can routinely be determined by the skilled person.

A flexible elastomer can be used between the seal and the rigid electrochemical cell enabling a water-tight setup for measurements on strongly curved structures.

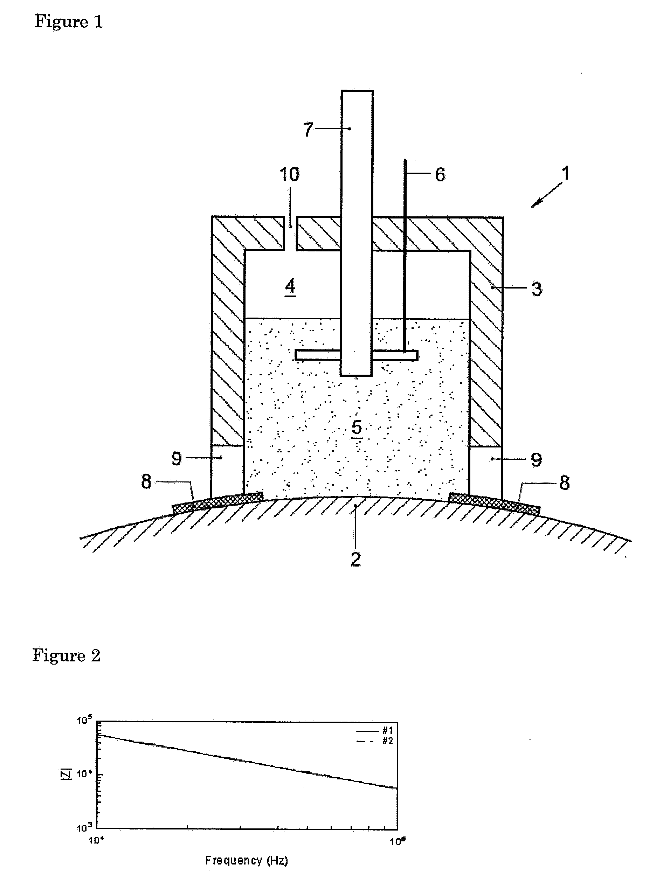

The electrochemical cell of the invention will now be described in more detail with reference to Figure 1, which shows a schematic cross-section of an embodiment of electrochemical cell 1 of the invention for measuring the impedance of substrate 2. Electrochemical cell 1 comprises a housing 3. The form of housing 3 is such that it defines a space 4. This space comprises an electrolyte 5. Space 4 further comprises a counter electrode 6 and a reference electrode 7. Counter electrode 6 is usually in the form of a metal mesh. Reference electrode 7 is usually placed in de centre of space 4. The electrochemical cell is used to measure the impedance of substrate 2. Typically, substrate 2 is a coated substrate. Housing 3 of electrochemical cell 1 has an opening on the side of the electrochemical cell which is to be placed on substrate 2. This allows for electrolyte 5 in space 4 to be in electrical contact with substrate 2. Preferably, electrolyte 5 is in direct contact with substrate 2. Electrochemical cell 1 further comprises a flexible magnet 8 for fixing the electrochemical cell to substrate 5. The magnet is preferably in the form of a flange between housing 3 and substrate 2. The magnet enables a fluid tight seal so that electrolyte 5 does not leak from electrochemical cell 1. In the embodiment shown in Figure 1, electrolyte 5 is allowed to be in direct electrical contact with substrate 2, because flexible magnet 8 has an opening. In a special embodiment discussed in more detail below, electrochemical cell 1 comprises an elastomer 9 between housing 3 and flexible magnet 8. Housing 3 can further comprise an inlet 10 for charging electrochemical cell 1 with electrolyte 5.

The magnetic flux density of the flexible magnet depends on the size of the electrochemical cell and the type of application. Preferably, the dimensions and position of said flexible magnet in said electrochemical cell are such that the force required for pulling off the electrochemical cell is at least 10 N. On the other hand the pull-off force required preferably does not exceed 20 N, since this would trouble the handling of the electrochemical cell of the invention in the field.

The thickness of the flexible magnet can vary depending on the application. For instance, the thickness of the magnet can be at least 0.1 mm, preferably at least 0.3 mm, and more preferably at least 0.5 mm. A flexible magnet thickness of more than 5 mm is not preferred. Preferably, the thickness of the flexible magnet is in the range of 0.5-1 mm, more preferably 0.3-2 mm and even more preferably from 0.5-1 mm.

The flexible magnet should be capable of sealing the electrochemical cell in a fluid tight manner to a substrate to be analysed. Hence, once the electrochemical cell is attached to the substrate and filled with electrolyte, the flexible magnet seals the electromagnetic cell so that electrolyte is prevented from leaking from the cell.

During measurement the electrolyte should be in direct contact with the substrate which acts as the working electrode. Therefore, it is preferred that the flexible magnet is in the form of a mask comprising an opening which allows the electrolyte to be in contact with the substrate acting as working electrode. The mask and the opening can have any form, such as rectangular, square, or circular.

The counter electrode in the electrochemical cell can be made from an inert conductive material, in particular an inert metal, such as platinum, gold, or niobium, or from other materials such as graphite. The counter electrode can be in the form of a mesh. Preferably, the mesh has a relatively large surface, such as a surface of at least 10 cm$^2$, preferably at least 40 cm$^2$, and more preferably at least 70 cm$^2$.

The reference electrode is typically placed in the centre of the electrochemical cell. The reference electrode can be for example a standard hydrogen electrode, a saturated calomel electrode, a copper-copper(II) sulphate electrode, a silver-chloride electrode, or a palladium-hydrogen electrode. A particularly suitable reference electrode is a saturated calomel electrode, because it is very stable. In certain cases, such as for following higher frequencies, such as frequencies of 10$^5$ Hz or more, it is advantageous to couple the reference electrode via a capacitor to an inert metal wire (such as a platinum wire), which can for instance be mounted besides the reference electrode. The inert metal wire then follows the higher frequencies and a "dual reference electrode" is obtained. This is particularly suitable when the reference electrode is a saturated calomel electrode.

It is also possible to short the reference electrode with the counter electrode, so that in fact the reference electrode is absent. The combined counter and reference electrode is immersed in the electrolyte can then be used both for delivering the current and as a reference electrode. However, the advantage of splitting up the counter electrode and the reference electrode is basically that the reference electrode then does not deliver a current and that the impedance contains no contribution of possible polarisation effects of the reference electrode. In addition, a very stable reference electrode such as a saturated calomel electrode can be used so that the setpoint voltage and the current can be set very accurately. This embodiment is particularly advantageous for strongly degraded coatings, for which the potential is relatively unstable.

Any suitable electrolyte can be applied. Good results are obtained with liquid aqueous electrolytes, such as an aqueous sodium chloride solution, an aqueous potassium chloride solution, an aqueous sodium sulphate solution, and/or an aqueous potassium hydroxide solution. The salt concentration of the electrolytes can vary strongly. Concentrations in the range of 0.001 to 1 M are particularly suitable. Good results have been achieved using sodium chloride solutions with a concentration in the range of 0.17 M to saturated solutions. Another electrolyte giving good results is substitute ocean water, ASTM D 1141, It is advantageous to tune the electrolytes to the environment to which the substrate is normally exposed.

The presence of an electrolyte is important for obtaining a good insight in the degree of coating degradation. The uptake of water has a large influence on the capacitance and resistance of the coating. This can be explained as follows.

The coating resistance $R_c$ is generally interpreted as the pore resistance due to electrolyte penetration through microscopic pores or in areas where more rapid solution uptake occurs due to inadequate cross-linking of the polymer. Thus, the magnitude of $R_c$ is indicative for the state of degradation of the coating. $R_c$ can also increase with time, probably as a result of pore or defect blockage by corrosion product build-up.

The coating capacitance $C_c$ is given by the following equation.

$$C_c = \frac{\varepsilon_0 \varepsilon_r A}{d}$$

where $C_c$ is the capacitance of the coating in F, $\varepsilon_0$ is the permittivity of vacuum (approximately 8.854·10$^{-12}$ F·m$^{-1}$), $\varepsilon_r$ is the relative permittivity or dielectric constant of the coating, $A$ is the surface area of the coating in m$^2$, and $d$ is the thickness of the coating in m.

As the relative dielectric constant of coatings is much lower (4 to 8) compared to that of water (80), water uptake by coatings results in a significant increase of $C_c$. As a result the degree of coating degradation cannot be determined accurately. The use of an electrolyte allows creating similar conditions for measurements of a single sample taken at different points in time.

The housing can be made from a rigid material, such as PMMA (polymethyl methacrylate) or PVC (polyvinyl chloride). The material of the housing is preferably an electrically insulating material. The housing preferably comprises an inlet for charging the electrochemical cell with the electrolyte once the cell has been attached to the substrate to be analysed.

Using the electrochemical cell of the invention, a pre-determined area of the substrate is exposed to the electrolyte. This is highly advantageous when a substrate is being analysed over longer periods of time and different electrochemical impedance measurements of the same sample need to be recorded. In a preferred embodiment the flexible magnet can be used as a mask to pre-determine the area of the substrate that is exposed to the electrolyte.

In a special embodiment of the invention the electrochemical cell comprises an elastomer, such as a rubber or silicone between the housing and the flexible magnet. The rubber allows flattening out large curvatures which may be present on the substrate surface. This embodiment is therefore particularly suitable in the case of a highly curved substrate.

In a further aspect the invention is directed to an electrochemical impedance spectroscopy method for analysing a conductive substrate, comprising

- attaching an electrochemical cell according to invention to said substrate substrate;
- filling said electrochemical cell with electrolyte, such that said counter electrode and said reference electrode are in electrical contact with said electrolyte; and
- measuring the impedance of said substrate.

The flexible magnet enables to attach the electrochemical cell of the invention to a substrate to be analysed in a fluid tight manner. In a further step the cell can be filled with electrolyte preferably by means of an inlet provided in the housing of said electrochemical cell. Preferably, this step is carried out after the electrochemical cell is attached to the substrate. Thereafter, the impedance of the substrate is usually measured by applying a small sinusoidal perturbation between the counter electrode and the working electrode with a frequency in the range of 0.001-1000 000 Hz. A measurement batch typically consists of a number of frequency sweeps, while the response of the system is monitored.

The method of the invention can be carried out in so-called potentiostatic or galvanostatic mode. In the potentiostatic mode, experiments are done at a fixed direct current (DC) potential. A sinusoidal potential perturbation is superimposed on the DC potential and applied to the cell. The resulting current is measured to determine the impedance of the system. In the galvanostatic mode, experiments are done at a fixed DC current. A sinusoidal current perturbation is superimposed on the DC current and is applied to the cell. The resulting potential is measured to determine the impedance of the system. In most cases, the potentiostatic mode is preferred. For most substrates the open circuit potential is stable. Maintaining the same potential during the measurement therefore does not deviate strongly from the operating situation of the substrate. For these substrates the potentiostatic mode therefore yields the best results.

In some cases, such as electrodeposition at constant current and battery research, it is advantageous to perform the impedance measurement in the galvanostatic mode. This technique is appropriate for substrates that are active or subject to rapid changes, *viz.* substrates that are subject to significant change during the measurement. Examples of such substrates are corroding metals, repassivating surfaces, or surfaces subject to layer formation.

The impedance response of a system is preferably linear. In that case, the impedance response is independent of the perturbation amplitude. This can be achieved by using small amplitude perturbations. A very small value can give rise to poor signal to noise ratio and hence "noisy" data. A large value can result in non-linearity of the impedance response. Typically, a value of 5-50 mV, preferably 5-20 mV, such as a value of 10 mV, is used for most electrochemical systems. Experimentally, one can verify the linearity of the impedance response by performing the same experiment at different perturbation amplitude. The range for which the impedance is independent of the perturbation amplitude provides the preferred range. The largest value in this range can be used to give the highest signal to noise ratio.

In order to obtain all the time constants of the system one should in theory choose the widest possible frequency range. In practice the frequency range is constrained by instrument limitations such as the high frequency limit of the potentiostat and the slow response of the reference electrode. Typically potentiostats can go up to a frequency of 1 MHz.

The measurement time at each frequency is the inverse of the frequency. Hence, a very low frequency limit can result in a very long time for the collection of a complete scan. For systems that are changing with time (*e.g.* due to corrosion, growth of a film *etc.*) this implies that the system has changed during the course of the data collection. Therefore, the low frequency limit should in such cases be chosen to ensure minimal change in the system during data collection. An electrochemical impedance measurement can for instance be started at a frequency of about 100 000 Hz and continued to a frequency of about 100 Hz. The measurement of this frequency range takes about 1 minute. For degraded substrates the measurement can go down to about 0.01 Hz or even 0.001 Hz. Preferably, the impedance measurement comprises measuring at least one data point in the frequency range of 0.1-10 Hz, at least one data point in the frequency range of 10-1 000 Hz, and at least one data point in the frequency range of 1000-100 000 Hz.

The collected data can be fitted to an equivalent circuit. Preferably each element of the circuit represents a physical behaviour in the system. A resistor for instance represents the resistance of the electrolyte, while a capacitor represents the coating capacitance. As the coating ages, the equivalent circuit to which the data are fitted has to be extended. From the equivalent circuits, the physical processes can be derived.

The electrochemical impedance spectroscopy method of the invention is particularly suitable for analysing conductive substrates that comprise a coating, more preferably coated metals. In most cases, the coating is insulating. The method for instance allows the determination of protective (such as corrosion protective) properties of the coating.

Therefore in a further aspect the invention is directed to the use of an electrochemical cell of the invention for analysing the corrosion protective properties of a coated metal substrate. It is therefore required that the flexible magnet adheres to the substrate material. Suitable metal substrates therefore include ferromagnetic materials such as iron (steel), nickel, and cobalt.

It is not required for the method of the invention that the surface is flat. Rather, the invention is advantageously suited to measure the impedance of curved surfaces. Accordingly, the method of the invention is particularly suitable for analysing substrates such as pipelines, piping, ship hulls, pressure tanks, fuel tanks, ballast tanks, wind farms, sheet piling, and flood gates.

In a further aspect the invention is directed to the use of a flexible magnet in electrochemical impedance spectroscopy.

### Example

The method of the invention has been verified by determining the impedance of a substrate using a flexible magnet electrochemical cell and with the conventional EIS setup. With the flexible magnet electrochemical cell the impedance is measured of the same substrate according to the method of the invention. The substrate was a 2-layer polyester coilcoat (25 $\mu$m). The set-up of the conventional EIS setup is exactly the same, the only difference is the flexible magnet. The electrochemical cell with flexible magnet contained a 3 % NaCl solution as electrolyte. The hardness of the flexible magnet was 90 (Shore A).

The results are shown in Figure 2, which shows the impedance ($|Z|_{(f)}$) of a substrate using separate cells (#1) as measured by a conventional EIS setup, and the impedance of the same substrate using a flexible magnet (#2) as measured according to the method of the invention.

The values measured by the conventional EIS setup and values measured by the method of the invention are shown in Table 1.

Table 1 Measured and calculated values of the conventional EIS setup and the method of the invention.

| Coating parameter | Conventional EIS | Method of the invention |
|---|---|---|
| | #1 | #2 |
| $R_c$ | $3,58 \cdot 10^6$ | $5.72 \cdot 10^6$ |
| $C_c$ | $2.62 \cdot 10^{-10}$ | $2.48 \cdot 10^{-10}$ |

Within the measuring error, the coating resistance shows an exact correspondence, while the effective capacity shows a deviation of less than 6 %. The values of Table 1 clearly show the concurrence between the conventional measurements and the values measured in accordance with the method of the invention.

### Claims

1. Electrochemical cell for electrochemical impedance spectroscopy comprising

   - a housing defining a space comprising an electrolyte, a counter electrode and optionally a reference electrode, wherein said counter electrode and said reference electrode are arranged to be in electrical contact with said electrolyte during use;
   - an opening in said housing allowing the electrolyte to be in electrical contact with a substrate; and
   - a flexible magnet for attaching said electrochemical cell to said substrate.

2. Electrochemical cell according to claim 1, wherein said flexible magnet has a thickness of 0.1-5 mm, preferably 0.3-2 mm and more preferably from 0.5-1 mm.

3. Electrochemical cell according to claim 1 or 2, wherein said flexible magnet comprises magnetic powder dispersed in an elastomeric matrix.

4. Electrochemical cell according to any one of the preceding claims, wherein said flexible magnet has a tensile modulus of tensile modulus of less than 50 MPa, preferably less than 20 MPa, more preferably less than 10 MPa, as measured according to ISO standard 527.

5. Electrochemical cell according to any one of claims 1-3, wherein said flexible magnet has a Shore A hardness as measured according to ISO standard 7619 of less than 100, preferably less than 50, even more preferably less than 15.

6. Electrochemical cell according to any one of the preceding claims, wherein the dimensions and position of said flexible magnet are such that the force required for pulling off the electrochemical cell is at least 10 N, preferably 10-20 N.

7. Electrochemical cell according to any one of the preceding claims, comprising an elastomer between said housing and said flexible magnet, such as a rubber or silicone.

8. Electrochemical cell according to any one of the preceding claims, wherein said housing comprises charging means for charging the cell with an electrolyte.

9. Electrochemical impedance spectroscopy method for analysing a conductive substrate, comprising

   - attaching an electrochemical cell according to any one of the preceding claims to a substrate;
   - filling said electrochemical cell with electrolyte, such that said counter electrode and said reference electrode are in electrical contact with said electrolyte; and
   - measuring the impedance of said substrate.

10. Electrochemical impedance spectroscopy method according to claim 8, wherein said substrate comprises a coating.

11. Electrochemical impedance spectroscopy method according to any one of claims 8 or 9, wherein said coated substrate is curved.

12. Use of an electrochemical cell according to any one of claims 1-7 for analysing the corrosion protective properties of a coated metal substrate.

13. Use according to claim 11, wherein said coated metal substrate is curved, in particular cylindrical.

14. Use of a flexible magnet in electrochemical impedance spectroscopy for attaching an electrochemical cell to a substrate.

Figure 1

Figure 2

**European Patent Office**

**EUROPEAN SEARCH REPORT**

Application Number

EP 07 12 2457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 373 734 A (SHIH HONG [US] ET AL) 20 December 1994 (1994-12-20) * the whole document * | 1-14 | INV. G01N17/02 |
| Y | US 6 611 151 B1 (RUEDISUELI ROBERT L [US] ET AL) 26 August 2003 (2003-08-26) * the whole document * | 1-14 | |

TECHNICAL FIELDS SEARCHED (IPC)

G01N

The present search report has been drawn up for all claims

| Place of search | Date of completion of the search | Examiner |
|---|---|---|
| The Hague | 21 May 2008 | Joyce, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 12 2457

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2008

| Patent document cited in search report | | Publication date | Patent family member(s) | | Publication date |
|---|---|---|---|---|---|
| US 5373734 | A | 20-12-1994 | US | 5493904 A | 27-02-1996 |
| US 6611151 | B1 | 26-08-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6054038 A
- JP 61108954 A
- US 20040212370 A
- US 5621369 A
- US 4881988 A
- US 6773765 B
- EP 1480235 A

**Non-patent literature cited in the description**

- **ZDUNEK et al.** A field-EIS probe and methodology for measuring bridge coating performance. *fourth World Congress on Coatings Systems for Bridges and Steel Structures,* 01 February 1995